# EUROPEAN PATENT APPLICATION

(11) **EP 1 793 566 A2**
(43) Date of publication of application: **06.06.2007**
(21) Application number: 06016344.1
(22) Date of filing: 04.08.2006
(51) Int. Cl.: H04M 1/02

(54) **Swing hinge device for portable terminal and portable terminal having the same**

(30) Priority: 30.11.2005 KR 20050116007
(71) Applicant: Samsung Electronics Co., Ltd., Suwon-si, Gyeonggi-Do (KR)
(72) Inventor: Kim, Jae-Wook Samsung Electronics Co., Ltd., Suwon-si Gyeonggi-do (KR)
(74) Representative: Lang, Johannes

(57) **Abstract**

A hinge device (200) for a portable terminal includes a first hinge base (201), a second hinge base (202), and an elastic member (203). The first hinge base has a receiving groove (211) on a surface thereof. The second hinge base is rotatably coupled to the first hinge base and has stopper ribs (223) which extend from a surface of the second hinge base and are arranged along a circumferential direction. The elastic member is received in the receiving groove of the first hinge base and presses against an outer peripheral surface of the stopper ribs as the second hinge base rotates with respect to the first hinge base. The hinge device has a reduced number of parts so as to allow easy assembly of the hinge device, thereby improving manufacturing productivity. Further, the structure with the elastic member that presses the stopper rib minimizes the size of the portable terminal and improves the portability of the portable terminal.

## Description

### BACKGROUND OF THE INVENTION

### Field of the Invention

The present invention relates to a portable terminal. More particularly, the present invention relates to a hinge device for rotatably coupling one housing of a portable terminal to another housing of a portable terminal.

### Description of the Related Art

Generally, a portable terminal is a device for providing a wireless communication function between users, or between a user and a service provider through a mobile communication base station. A user can receive and use through the portable terminal various kinds of services, such as a voice communication service, a short message sending service, a mobile banking service and a TV viewing service, and contents such as on-line games, video-on demand, and the like.

The portable terminals can be generally classified, based on their shapes, into bar type portable terminals, flip-type portable terminals, folding type portable terminals, and sliding type portable terminals. Bar type portable terminals have a communication circuit and an input/output device such as a transmitter and a receiver disposed in a housing, and a flip type portable terminal has a flip cover which is coupled to a bar type portable terminal. A folder type portable terminal has a pair of housings which are capable of rotating and opening and have an input/output device which is arranged on the housings. The sliding type portable terminal has been recently developed and increases the portability and convenience of a portable terminal. The sliding type and folder type portable terminals have been favored by individual users.

Early mobile communication services using the portable terminal were limited to voice communication services, short message sending services, and the like. Service has been expanded to include transmitting files such as game, music and moving picture files, on-line game services, and multimedia services. Recently, digital multimedia broadcasting has been made commercially available for portable terminals. As a result, a portable terminal has been introduced which has a foldable structure like the folder type portable terminal and further has a housing including a display unit. The housing with the display unit may be rotated to locate the display unit transversely. To achieve the rotating operation of the housing, the portable terminal has three housings. That is, the portable terminal has a pair of housings coupled to each other to be foldable and an additional housing rotatably mounted on one of the housings.

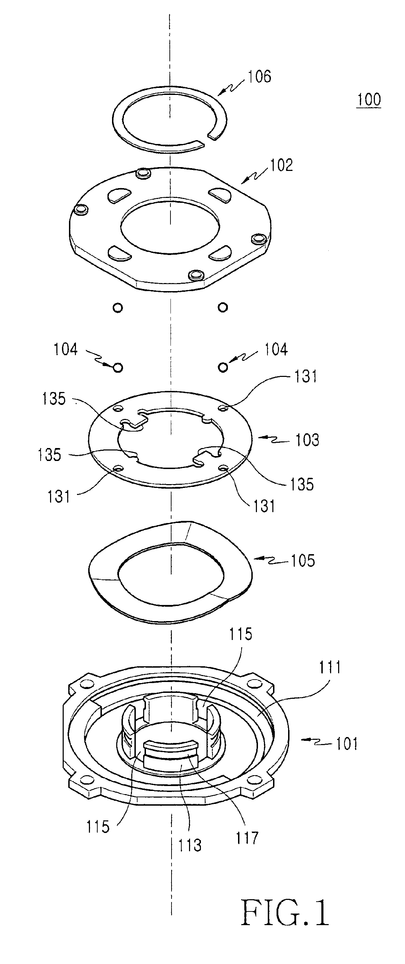

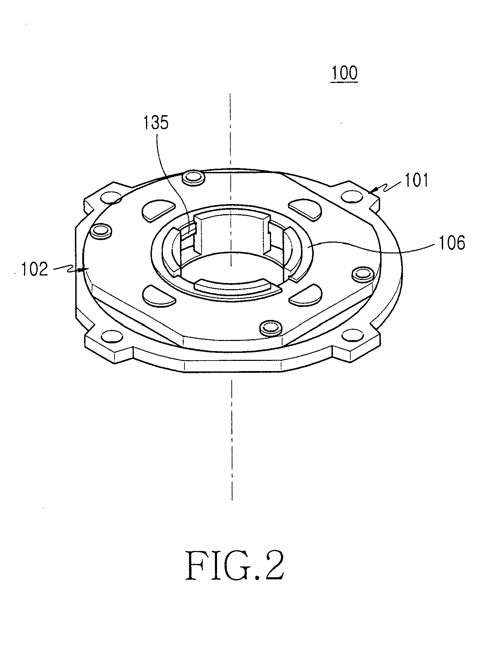

FIGS. 1 and 2 show a conventional hinge device 100 for a portable terminal. The hinge device 100 has first and second hinge bases 101 and 102 that are rotatably coupled to each other while facing each other. The first and second hinge bases 101 and 102 couple the housings forming the portable terminal to each other.

The first hinge base 101 is fixed to one of the housings of the portable terminal and has a receiving groove 111 on a surface thereof and a supporting shaft 113 extending from a center portion of the receiving groove 111. The supporting shaft 113 extends through the second hinge base 102. A restraining member 106, such as a C-ring, is assembled in a coupling groove 117 of an end of the supporting shaft 113 so that the first and second hinge bases 101 and 102 are rotatably assembled with each other while facing each other.

A guide plate 103 and a washer plate 105 are stacked and received in the receiving groove 111 of the first hinge base 101. The guide plate 103 has guide protrusions 135 on an inner periphery thereof and a plurality of stopper grooves 131 formed on a surface thereof.

When the guide plate 103 is coupled to and encloses the supporting shaft 113, the guide protrusions 135 are matched with guide slots 115 formed in the supporting shaft 113, thereby restraining the guide plate 103 from rotating with respect to the first hinge base 101. In addition, the stopper grooves 131 are arranged so as to face the second hinge base 102. Balls 104 are interposed between the second hinge base 102 and the guide plate 103. Although not shown, stopper grooves are formed on the second hinge base 102, which are alternatively matched with the stopper grooves 131 of the guide plate 103 when the second hinge base 102 rotates. When the second hinge base 102 rotates to match the stopper grooves of the second hinge base 102 with the stopper grooves 131 of the guide plate 103, the balls 104 are engaged with the stopper grooves 131 so as to fix the second hinge base 102 to the first hinge base 101. When the balls 104 are engaged with the stopper grooves 131, the second hinge base 102 is maintained in a fixed state before a user applies a predetermined amount of force to the housing coupled to the second hinge base 102.

At this time, the washer plate 105 has a wave shape and gives the guide plate 103 a resilient force so that the guide plate 103 contacts the second hinge base 102, thereby stably maintaining the fixed state of the second hinge base 102.

A portable terminal having three housings has large dimensions or thickness as compared with its structure, so it is inconvenient to carry the portable terminal. Furthermore, the structure of the conventional hinge device (that is, the guide plate and washer plate stacked between the first and second hinge bases and balls that are interposed between the second hinge base and the guide plate, as described above) limits the amount that the thickness of a portable terminal can be reduced. Furthermore, since the conventional hinge device is produced by assembling a plurality of parts, manufacturing productivity is hindered.

Accordingly, there is a need for an improved hinge device for a portable terminal which allows for the reduction in the size of the terminal.

### SUMMARY OF THE INVENTION

An aspect of the present invention is to address at least the above problems and/or disadvantages and to provide at least the advantages described below. Accordingly, an aspect of the present invention is to provide a hinge device for a portable terminal which can contribute to the reduction is size of the portable terminal, thereby improving the portability of the portable terminal.

Another aspect of the present invention is to provide a hinge device for a portable terminal which has a reduced number of parts as compared to conventional hinge devices, and which can be easily assembled, thereby improving manufacturing productivity.

In accordance with an exemplary embodiment of the present invention, a hinge device for a portable terminal comprises a first hinge base, a second hinge base, and an elastic member. The first hinge base comprises a receiving groove on a surface of the hinge base. The second hinge base is rotatably coupled to the first hinge base and comprises stopper ribs which extend from a surface of the second hinge base and are arranged along a circumferential direction. The elastic member is disposed in the receiving groove of the first hinge base and presses an outer peripheral surface of the stopper ribs as the second hinge base rotates with respect to the first hinge base.

In accordance with another exemplary embodiment of the present invention, a portable terminal comprises a first housing, a first hinge base, a second housing, a second hinge base, and an elastic member. The first hinge base is disposed on the first housing and comprises a surface and a receiving groove formed in the surface. The second hinge base is disposed on the second housing, and the second hinge base is coupled to the first hinge base. The second hinge base comprises stopper ribs which extend from a surface of the second hinge base, and the stopper ribs are arranged to form a substantially circular outer peripheral surface. The elastic member is received in the receiving groove of the first hinge base and presses the outer peripheral surface of the stopper ribs.

### BRIEF DESCRIPTION OF THE DRAWINGS

The above and other objects, features, and advantages of certain exemplary embodiments of the present invention will be more apparent from the following description taken in conjunction with the accompanying drawings, in which:
FIG. 1 is an exploded perspective view of a conventional hinge device for a portable terminal;
FIG. 2 is a perspective view of the conventional hinge device shown in FIG. 1, in which the hinge device is assembled;
FIG. 3 is an exploded perspective view of a hinge device for a portable terminal according to an exemplary embodiment of the present invention;
FIG. 4 is a perspective view of the hinge device shown in FIG. 3, in which the hinge device is assembled;
FIG. 5 is a perspective view from the bottom of the hinge device shown in FIG. 3;
FIG. 6 is a partially cut-away perspective view of the hinge device shown in FIG. 4;
FIG. 7 is a plan view of the hinge device in FIG. 3, in which an elastic member is assembled with the first hinge base of the hinge device;
FIG. 8 is a perspective view of a portable terminal with the hinge device in FIG. 3; and
FIG. 9 is a perspective view of the portable terminal shown in FIG. 8, in which a third housing is rotated.

Throughout the drawings, the same reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the exemplary embodiments of the invention. Accordingly, those of ordinary skill in the art will recognize that various changes and modifications of the exemplary embodiments described herein can be made without departing from the scope and spirit of the invention. Also, descriptions of well-known functions and constructions are omitted for clarity and conciseness.

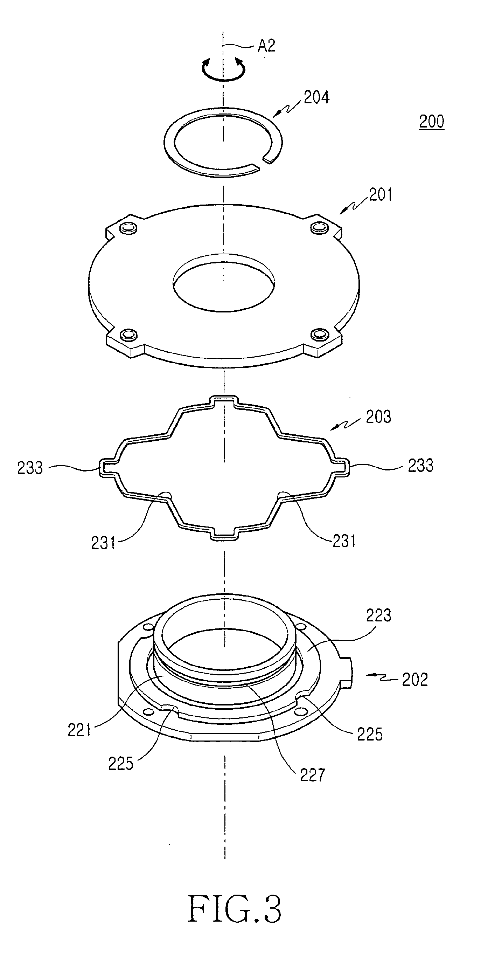

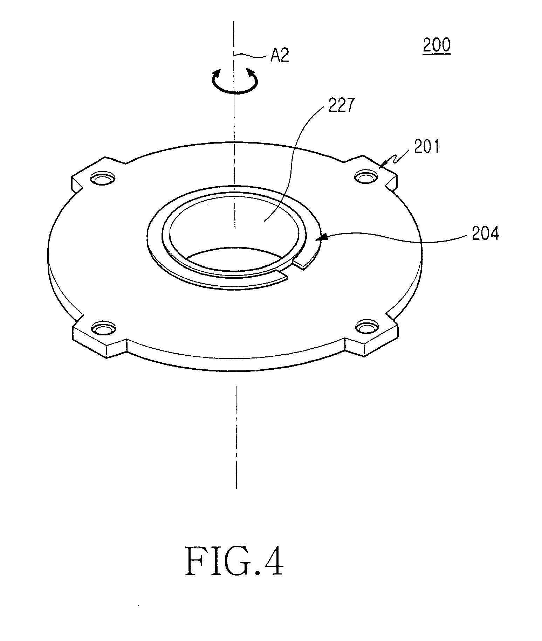

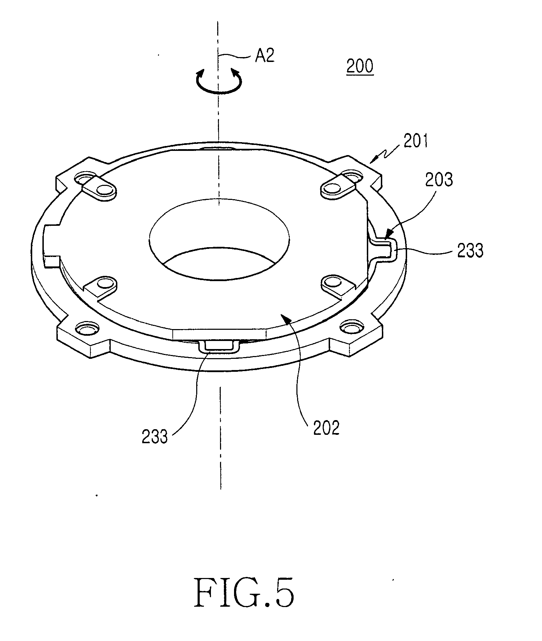

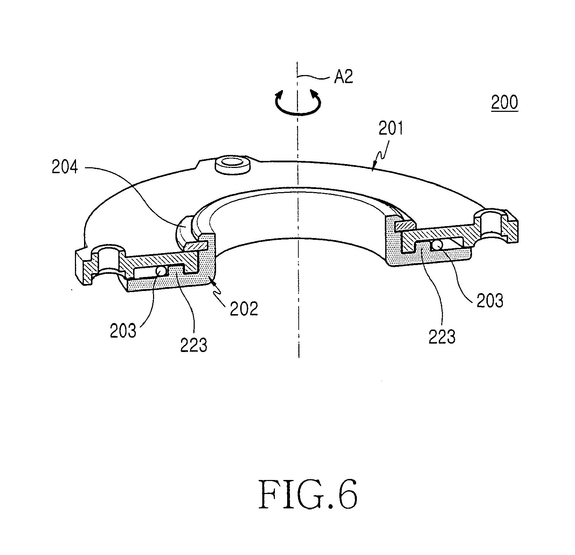

As shown in FIGS. 3 through 6, a hinge device 200 of a portable terminal, according to an exemplary embodiment of the present invention, is provided with first and second hinge bases 201 and 202 rotatably coupled to each other and facing each other. An elastic member 203 is disposed between the first and second hinge bases 201 and 202. The elastic member 203 is arranged around an exterior peripheral surface of a stopper rib 223 formed on the second hinge base 202. In an exemplary embodiment, the elastic member presses against the exterior peripheral surface of the stopper rib 223.

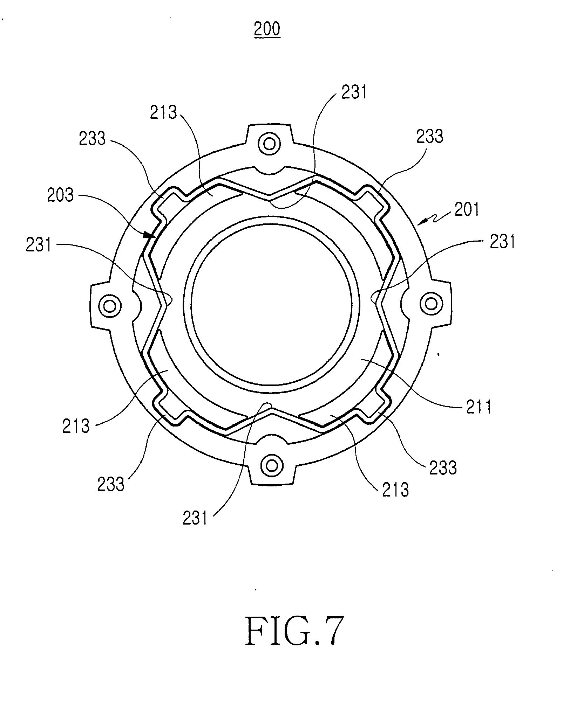

Referring to FIG. 7, the first hinge base 201 has a receiving groove 211 formed on a surface of the first hinge base 201, and the receiving groove 211 receives the elastic member 203. At least a pair of supporting ribs 213 are formed at a predetermined distance in the receiving groove 211 and extend from a bottom surface of the first hinge base 201. In the illustrated exemplary embodiment, two pairs of supporting ribs are provided. The supporting ribs 213 are spaced at a predetermined distance from each other and arranged in a circumferential direction of the first hinge base 201. In addition, the first hinge base 201 has coupling holes, and the like formed therein to couple the first hinge base 201 to the housing of the portable terminal.

The elastic member 203 is stably seated in the receiving groove 211, so as to enclose an exterior peripheral surface of the supporting ribs 213. The elastic member 203 has a loop shape, and includes a pair of stopper portions 231 bent toward a center of the first hinge base 201 and a pair of supporting portions 233 bent toward the exterior peripheral surface of the first hinge base 201. The stopper portions 231 and the supporting portions 233 are alternately arranged along the circumferential direction of the first hinge base 201. In the present exemplary embodiment, the elastic member 203 includes two pairs of stopper portions 231 and supporting portions 233, respectively.

The stopper portions 231 are located between the supporting ribs 213, and protrude into the supporting ribs 213. The supporting portions 233 are formed to correspond to the shape of the receiving groove 211, so as to support the elastic member 203, thereby maintaining itself stably seated in the receiving groove 211.

When the elastic member 203 is stably seated in the receiving groove 211, the elastic member 203 provides elasticity and maintains the state that the stopper portions 231 protrude inside the supporting ribs 213.

The second hinge base 202 has a supporting shaft 221 formed on a surface thereof, which extends through the first hinge base 201 over the other surface of the first hinge base 201. A coupling groove 227 is formed on an exterior peripheral surface of an end portion of the supporting shaft 221. When the second hinge base 202 is coupled to the first hinge base 201 while facing the first hinge base 201, the coupling groove 227 is exposed to the other surface of the first hinge base 201 and then a restraining member 204, such as a C-ring, is assembled to the coupling groove 227. As a result, the second hinge base 202 is rotatably coupled to the first hinge base 201.

The second hinge base 202 has a stopper rib 223 formed on a surface thereof. When the second hinge base 202 is coupled to the first hinge base 201, the stopper rib 223 is located in the receiving groove 211, of which an outer peripheral surface faces an inner peripheral surface of the supporting rib 213. At this time, a part of the elastic member 203, particularly the stopper portions 231, presses the outer peripheral surface of the stopper rib 223. Accordingly, the second hinge base 202 rotates relative to the first hinge base 201, and the elastic member 203 provides a frictional force to the second hinge base 202, thereby restricting the rotation or movement of the second hinge base 202.

On the other hand, a plurality of stopper grooves 225 are formed at a desired angle with respect to one another on the outer peripheral surface of the stopper rib 223. In the present exemplary embodiment, the stopper grooves 225 are formed in two pairs to match the stopper portions 231. As the second hinge base 202 rotates, therefore, the stopper portions 231 are engaged with the stopper grooves 225, respectively. When the stopper portions 231 are engaged with the stopper grooves 225, the second hinge base 202 stops its rotation. When the stopper portions 231 are engaged with the stopper grooves 225 and enough exterior force to elastically deform the stopper portions 231 is applied to the stopper portions 231, the second hinge base 202 may rotate.

In the conventional hinge device, the guide plate is interposed between the first and second hinge bases, while the balls are located between the second hinge device and the guide plate to act as stoppers. In the hinge device 200 according to exemplary embodiment of the present invention, the elastic member functions as a stopper, thereby allowing the hinge device to have a reduced thickness.

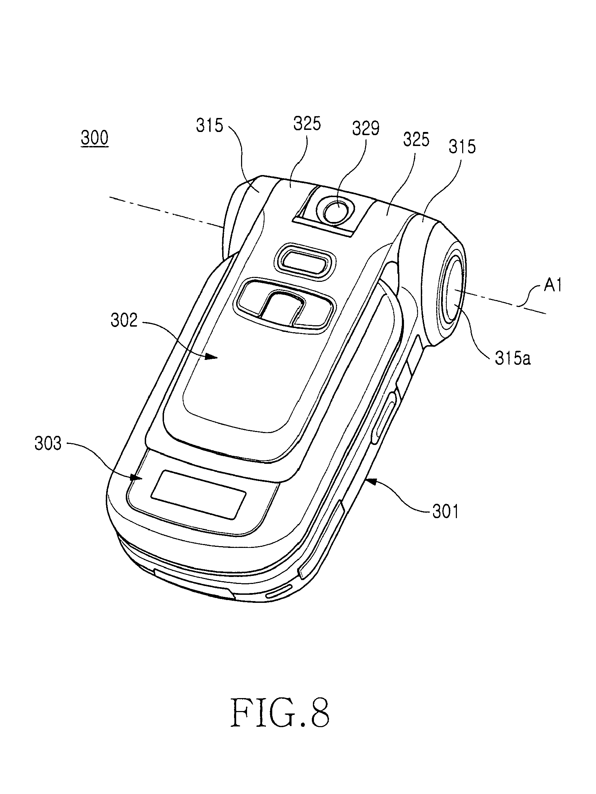

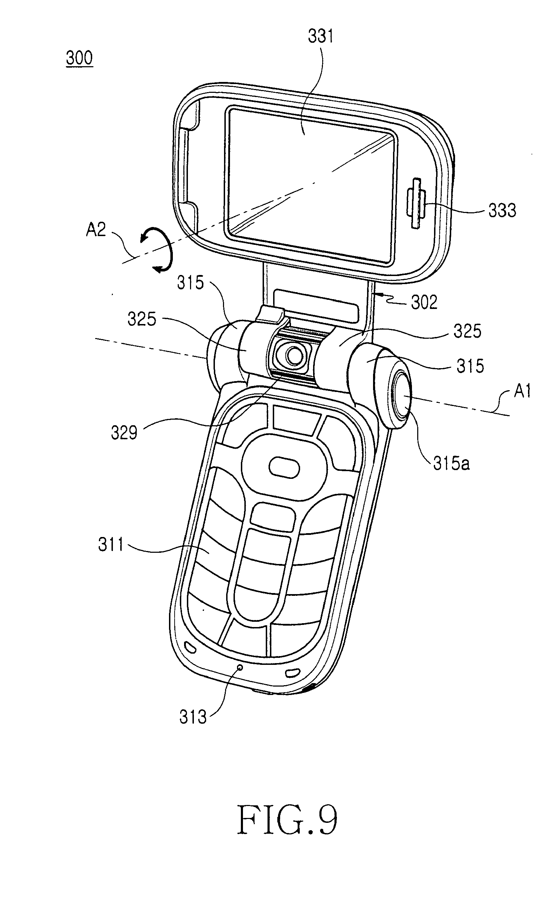

Referring to FIGS. 8 and 9, the portable terminal 300, having the hinge device 200, includes first and second housings 301 and 302 assembled with each other so as to be capable of folding toward each other, and a third housing 303 rotatably coupled to the second housing 302 while facing the second housing 302. As shown in FIG. 9, the third housing 303 can rotate on the second housing 302 with respect to the second housing 302 and arrange the display unit 331 transversely, so that a user may conveniently use the display unit 331 for such activities as watching television using digital multimedia broadcasting services.

The first housing 301 has a keypad 311 and a transmitter 313 on a surface thereof. As the second housing 302 is folded toward the first housing 301, the keypad 311 and the transmitter 313 are open and closed. The first housing 301 has side hinge arms 315 on both sides of one end of the first housing 301, while speaker units 315a are mounted on outer surfaces of the side hinge arms 315 respectively.

The second housing 302 serves as a connecting member which connects the third housing 303 to the first housing 301. The second housing 302 has a center hinge arm 325 formed at an end of the second housing 302 and coupled to the side hinge arms 315 so as to be capable of rotating around a first hinge axis A1. As the center hinge arm 325 is rotatably coupled to the side hinge arms 315, the second housing can be assembled along with the third housing 303 with the first housing 301 to be folded toward the first housing 301. A camera lens 329 may be provided to the center hinge arm 325. The camera lens 329 can also rotate around the first hinge axis A1 and take pictures from different angles.

The third housing 303 has the display unit 331 and a microphone 333 mounted on an inner surface thereof, and an outer surface of the third housing 303 is coupled around a second hinge axis A2 to an inner surface of the second housing 302.

At this time, the hinge device 200 allows the second housing 302 to be rotatably assembled with the third housing 303. That is, the first hinge base 201 is fixed to one of the second and third housings 302 and 303, while the second hinge base 202 is fixed to the other housing. Thus, the third housing 300 rotates around the second hinge axis A2, and may be transversely arranged.

When the third housing 303 rotates, the second hinge base 202 rotates with respect to the first hinge base 201, and then stops its rotation when the stopper portions 231 are engaged with the stopper grooves 225, respectively. In the illustrated exemplary embodiment, there are two pairs of stopper portions 231 and stopper grooves 225 and they are arranged at equal angles. Therefore, the third housing 303 rotates by an angle of, for example, about 90 degrees around the second hinge axis A2, and then stops its rotation, thereby locating the display unit 321 transversely.

When the first and second hinge bases have the above-described constructions, the hinge device according to the exemplary embodiment of present invention can reduce the thickness of the portable terminal in comparison with the conventional hinge device. The conventional hinge device has a thickness of, for example, 4.5 mm, while the hinge device according to the exemplary embodiment of the present invention has a thickness of, for example, 3.15 mm. Therefore, it can be understood that the thickness of the hinge device according to the present invention may be reduced by, for example, up to about 30 percent, as compared with the conventional hinge device. Since a typical portable terminal 300 has a thickness of about 30 mm, for example, the thickness of the portable terminal may be reduced by about 4 percent when the thickness of the hinge device is reduced by about 30 percent.

On the other hand, the hinge device 200 can be applied to portable terminals with any shape if the portable terminal has a pair of housings rotatably coupled to each other. For example, the hinge device may also applied to a bar type portable terminal in which a rotary housing provided with a display unit is rotatably mounted on a bar type housing. That is, the rotary housing is mounted on the bar type housing by means of the hinge device according to the exemplary embodiment of the present invention. If the bar type portable terminal has a thickness of, for example, 20 mm ~ 25 mm, and the hinge device according to the exemplary embodiment of the present invention is used with the bar type portable terminal, the thickness of the portable terminal is reduced by about 5~7 percent.

As described above, the hinge device for the portable terminal according to the exemplary embodiment of the present invention has a structure in which a pair of the housings are coupled to each other while facing each other and in which the number of parts is reduced so as to allow easy assembly, thereby contributing to increased manufacturing productivity. Furthermore, to produce the stopper function, the stacked stopper structure is replaced with a structure in which the elastic member presses the stopper rib, thereby minimizing the size of the portable terminal and improving the portability of the portable terminal.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A hinge device for a portable terminal comprising:
a first hinge base comprising a receiving groove on a surface of the first hinge base;
a second hinge base rotatably coupled to the first hinge base, the second hinge base comprising stopper ribs which protrude on a surface of the second hinge base and are extended along a circumferential direction; and
an elastic member disposed in the receiving groove of the first hinge base,
wherein the elastic member presses an outer peripheral surface of the stopper ribs as the second hinge base rotates with respect to the first hinge base.

2. The hinge device for a portable terminal as claimed in claim 1, further comprising:
at least a pair of stopper grooves formed at predetermined angles on the outer peripheral surface of the stopper ribs, wherein the elastic member engages the stopper grooves to restrict the rotation of the second hinge base when the second hinge base rotates by a predetermined angle.

3. The hinge device for a portable terminal as claimed in claim 2, wherein the at least a pair of stopper grooves are formed at equal angles on the outer peripheral surface of the stopper ribs.

4. The hinge device for a portable terminal as claimed in claim 1, further comprising:
a supporting shaft extending from a surface of the second hinge base to penetrate the first hinge base.

5. The hinge device for a portable terminal as claimed in claim 4, wherein the supporting shaft extends through the first hinge base.

6. The hinge device for a portable terminal as claimed in claim 5, further comprising:
a restraining member coupled to an outer peripheral surface of the supporting shaft that extends through the first hinge base.

7. The hinge device for a portable terminal as claimed in claim 1, wherein the elastic member comprises a closed loop.

8. The hinge device for a portable terminal as claimed in claim 7, wherein the elastic member comprises at least a pair of stopper portions bent toward a center portion of the first hinge base and at least a pair of supporting portions bent toward an outer peripheral surface of the first hinge base.

9. The hinge device for a portable terminal as claimed in claim 8, wherein the stopper portions and the supporting portions are alternately arranged.

10. The hinge device for a portable terminal as claimed in claim 9, further comprising:
at least a pair of stopper grooves formed on the outer peripheral surface of the stopper ribs, wherein the stopper portions of the elastic member engage the stopper grooves of the stopper ribs as the second hinge base rotates.

11. The hinge device for a portable terminal as claimed in claim 1, wherein the portable terminal comprises a pair of housings, and the first hinge base is fixed to one of housings of the portable terminal, and the second hinge base is fixed to the other one of the housings of the portable terminal.

12. The hinge device for a portable terminal as claimed in claim 1, further comprising:
at least a pair of supporting ribs, wherein the stopper rib is placed such that the outer peripheral surface of the stopper rib faces an inner peripheral surface of the supporting ribs when the first hinge base is assembled with the second hinge base.

13. The hinge device for a portable terminal as claimed in claim 12, wherein the supporting ribs extend along a circumference of the first hinge base, and the elastic member is a closed loop that encloses the outer peripheral surface of the supporting ribs.

14. The hinge device for a portable terminal as claimed in claim 13, wherein a part of the elastic member is bent toward a center portion of the first hinge base to form at least a pair of stopper portions which are disposed between the supporting ribs so as to press the outer peripheral surface of the stopper rib.

15. The hinge device for a portable terminal as claimed in claim 14, further comprising:
stopper grooves formed on the outer peripheral surface of the stopper rib,
wherein the stopper grooves are alternatively engaged with the stopper portions when the second hinge base rotates.

16. A portable terminal comprising:
a first housing;
a first hinge base disposed on the first housing, the first hinge base comprising a surface and a receiving groove formed in the surface;
a second housing;
a second hinge base disposed on the second housing, the second hinge base being coupled to the first hinge base, the second hinge base comprising stopper ribs which protrude on a surface of the second hinge base, the stopper ribs being extended to form a substantially circular outer peripheral surface; and
an elastic member received in the receiving groove of the first hinge base, the elastic member pressing the outer peripheral surface of the stopper ribs.

17. The portable terminal as claimed in claim 16, wherein
at least one stopper groove is formed on the outer peripheral surface of the stopper ribs, and
the elastic member engages the at least one stopper groove to restrict the rotation of the second hinge base when the second hinge base rotates.

18. The portable terminal as claimed in claim 17, further comprising:
a supporting shaft extending from a surface of the second hinge base and through the first hinge base; and
a restraining member coupled to the supporting shaft to assemble the first hinge base to the second hinge base.

19. The portable terminal as claimed in claim 18, wherein the elastic member comprises a closed loop.

20. The portable terminal as claimed in claim 19, wherein the elastic member comprises at least a pair of stopper portions bent toward a center portion of the first hinge base and at least a pair of supporting portions bent toward an outer peripheral surface of the first hinge base.

21. The portable terminal as claimed in claim 20, wherein the stopper portions and the supporting portions are alternately arranged.

22. The portable terminal as claimed in claim 21, further comprising:
at least a pair of stopper grooves formed on the outer peripheral surface of the stopper ribs, wherein the stopper portions of the elastic member engage the stopper grooves of the stopper ribs as the second hinge base rotates.

23. The portable terminal as claimed in claim 16, further comprising:
a pair of supporting ribs formed on the first hinge base, the pair of supporting ribs having an inner peripheral surface that faces the outer peripheral surface of the stopper ribs when the first hinge base is assembled with the second hinge base.

24. The portable terminal as claimed in claim 23, wherein the pair of supporting ribs form a substantially circular outer peripheral surface.

25. The portable terminal as claimed in claim 23, wherein the elastic member is a closed loop that encloses the outer peripheral surface of the pair of supporting ribs.
